## Europäisches Patentamt

## European Patent Office

## Office européen des brevets

(11) Numéro de publication: **0 181 250**
**B1**

(12) **FASCICULE DE BREVET EUROPEEN**

(45) Date de publication du fascicule du brevet:
**20.04.88**

(21) Numéro de dépôt: **85402024.5**

(22) Date de dépôt: **18.10.85**

(51) Int. Cl.⁴: **F 28 F 11/02,** F 16 L 55/16,
B 21 D 39/08, B 23 K 1/18

(54) Procédé de réparation par chemisage d'un tube d'un générateur de vapeur et chemise de réparation de ce tube.

(30) Priorité: **06.11.84 FR 8416880**

(43) Date de publication de la demande:
**14.05.86 Bulletin 86/20**

(45) Mention de la délivrance du brevet:
**20.04.88 Bulletin 88/16**

(84) Etats contractants désignés:
**BE CH DE IT LI SE**

(56) Documents cités:
**EP - A - 0 047 407**
**EP - A - 0 047 410**
**EP - A - 0 112 612**
**DE - C - 3 216 297**
**FR - A - 1 303 273**
**GB - A - 1 583 659**
**GB - A - 2 032 559**
**US - A - 2 094 495**

(73) Titulaire: **FRAMATOME ET CIE., Tour Fiat 1, Place de la Coupole, F-92400 Courbevoie (FR)**

(72) Inventeur: **Gaudin, Jean-Paul, Bâtiment D - allée 43 27 avenue Lacassagne, F-69003 Lyon (FR)**

(74) Mandataire: **Bressand, Georges et al, c/o CABINET LAVOIX 2 Place d'Estienne d'Orves, F-75441 Paris Cedex 09 (FR)**

ACTORUM AG

## Description

L'invention concerne un procédé de réparation par chemisage d'un tube d'un générateur de vapeur et une chemise de réparation de ce tube.

Les générateurs de vapeur des réacteurs nucléaires à eau sous pression comportent un faisceau de tubes dont les extrémités sont dudgeonnées dans une plaque tubulaire de forte épaisseur. L'eau primaire du réacteur à forte pression et à haute température qui vient en contact avec les assemblages combustibles du coeur circule à l'intérieur des tubes du faisceau pour échauffer et vaporiser de l'eau d'alimentation mise en contact avec la paroi externe des tubes, à l'intérieur de l'enveloppe du générateur de vapeur.

Les tubes du faisceau affleurent sur l'une des faces de la plaque appelée face d'entrée, par où l'eau primaire entre et ressort du faisceau dans deux zones distinctes et ressortent de cette plaque tubulaire pour pénétrer dans l'enveloppe du faisceau par son autre face ou face de sortie.

La paroi des tubes du faisceau constitue donc une barrière entre le fluide primaire contenant des produits radio-actifs et l'eau d'alimentation à vaporiser dont la vapeur est envoyée à la turbine associée au réacteur nucléaire. Il est donc nécessaire d'éviter au maximum l'apparition de fuite dans les tubes du faisceau du générateur de vapeur et de réparer les tubes le plus vite possible et de façon efficace, lorsque leur paroi est percée.

Du fait des gradients de température, des contraintes mécaniques dues aux différences de pression et aux différentes formes de corrosion pouvant apparaître dans le générateur de vapeur, tant du côté primaire que du côté secondaire, au cours de l'utilisation du générateur de vapeur dont la durée de vie doit être égale à celle des autres parties du réacteur, des perçages des tubes générateurs de fuite peuvent apparaître et nécessiter des réparations, lors des phases d'entretien du réacteur.

Jusqu'ici, une des techniques les plus utilisées consistait à placer le tube défectueux hors service par l'intermédiaire d'un bouchon fixé à l'extrémité du tube voisine de la face d'entrée de la plaque tubulaire, dans sa partie recevant l'eau primaire venant du coeur du réacteur. Cette technique connue est d'une assez grande fiabilité mais a pour inconvénient de diminuer la surface d'échange du générateur de vapeur et ce, d'autant plus, qu'un plus grand nombre de tubes du faisceau aura dû être mis hors service.

On a donc imaginé des procédés de réparation des tubes du faisceau d'un générateur de vapeur par chemisage de ces tubes au niveau du défaut entraînant une perte d'étanchéité. Une chemise tubulaire d'un diamètre extérieur un peu inférieur au diamètre intérieur du tube à réparer et d'une longueur suffisante pour recouvrir le défaut est introduite dans le tube par la face d'entrée de la plaque tubulaire et placée dans cette plaque tubulaire et dans le tube de façon à affleurer la face d'entrée. On fixe ensuite cette chemise par expansion diamétrale à l'intérieur du tube.

On a par exemple proposé de réaliser cette expansion par un mandrin hydraulique mais la tenue mécanique et l'étanchéité du tube réparé se sont avérées insuffisantes.

On a proposé également d'améliorer la fixation de la chemise en la dudgeonnant à l'intérieur du tube. Le dudgeonnage se traduit par un laminage de la chemise à l'intérieur du tube et donc par une diminution de son épaisseur. Cependant, une telle opération de dudgeonnage pour rendre la fixation de la chemise suffisamment résistante, n'est possible que dans la partie du tube située à l'intérieur de la plaque tubulaire.

On a donc proposé de souder la chemise à l'intérieur du tube après expansion hydraulique de celle-ci. Cependant, les températures de soudage avec ou sans métal d'apport nécessitent d'opérer en ambiance protégée, ce qui complique les opérations de réparation des tubes. C'est pourquoi, on préfère généralement fixer la chemise dans le tube par brasage après déformation de celle-ci par pression hydraulique (EP-A-47.410).

On fixe donc l'extrémité de la chemise affleurant la face d'entrée de la plaque tubulaire à l'intérieur du tube, par dudgeonnage à l'intérieur de la plaque tubulaire et l'on assure l'étanchéité de la liaison par une soudure à l'extrémité du tube et de la chemise.

On réalise alors une expansion diamétrale de la chemise à l'intérieur du tube par voie hydraulique, dans une seconde zone de cette chemise à l'extérieur de la plaque tubulaire. On complète la fixation par fusion d'un matériau de brasage préalablement introduit entre la surface extérieure de la chemise et la surface intérieure du tube dans la zone subissant l'expansion hydraulique.

Un tel procédé permet d'assurer une fixation mécanique satisfaisante de la chemise à l'intérieur du tube, mais on s'est aperçu que le tube et la chemise subissaient une corrosion accrue au-dessus de la zone de jonction par expansion hydraulique et brasage. Cette corrosion accrue peut être reliée à la présence d'un interstice entre le tube et la chemise, dans la partie d'extrémié du tube opposée à son extrémité dudgeonné dans la plaque tubulaire. En effet, il n'est pas possible d'assurer une expansion hydraulique jusqu'à la partie extrême du tube puisqu'il faut assurer dans cette partie, une étanchéité satisfaisante de la chambre d'expansion de la paroi interne de la chemise.

On a également proposé dans le EP-A-0047.410 de remplacer l'opération d'expansion hydraulique par un dudgeonnage, sans prévoir, toutefois, un dudgeonnage dans la zone extrême de la chemise de façon à éviter la présence d'un interstice entre la partie d'extrémité de la chemise et le tube.

Dans le cas où on utilise un mandrin à paroi déformable, on est également obligé de placer ce mandrin à une certaine distance de l'extémité supérieure de la chemise à l'intérieur du tube.

Dans tous les cas, il existe donc une zone morte d'une certaine longueur dans laquelle l'expansion diamétrale de la chemise à l'intérieur du tube n'a pas lieu. Il en résulte un interstice annulaire entre la chemise et le tube à l'intérieur duquel viennent se déposer des produits de corrosion ou bien des produits radio-actifs qui détériorent les conditions d'exploitation et diminuent la résistance à la corrosion du tube.

Jusqu'ici, on avait sous-estimé l'importance de cette zone morte dans la partie d'extrémité du tube et l'on s'était surtout attaché à créer une liaison mécaniquement résistante entre la chemise et le tube.

Le but de l'invention est donc de proposer un procédé de réparation par chemisage d'un tube d'un générateur de vapeur comportant un faisceau de tubes et une plaque tubulaire dans laquelle les tubes du faisceau sont dudgeonnés depuis la face d'entrée de la plaque tubulaire sur laquelle affleurent les extrémités des tubes jusqu'à la face de sortie par laquelle les tubes pénètrent dans le corps du générateur de vapeur, consistant à introduire dans le tube à réparer, depuis la face d'entrée de la plaque tubulaire, une chemise tubulaire d'un diamètre extérieur un peu inférieur au diamètre intérieur du tube et d'une longueur adaptée à la réparation à effectuer, à fixer la chemise par dudgeonnage dans le tube, dans une première zone proche de son extrémité, au voisinage de la face d'entrée de la plaque tubulaire et à fixer la chemise dans le tube, dans une seconde zone en dehors de la plaque tubulaire, par une expansion diamétrale réalisée par dudgeonnage suivie d'un brasage de la surface externe de la chemise sur la surface interne du tube, ce procédé de réparation pouvant permettre d'obtenir une fixation de grande résistance mécanique, sans création de zone, favorisant le dépôt de produits radio-actifs ou de produits de corrosion à l'intérieur du tube.

Dans ce but, l'expansion diamétrale de la chemise est réalisée dans sa partie extrême apposée à l'extrémité dudgeonnée de la plaque tubulaire, de façon que la chemise soit déformée plastiquement et que le tube soit déformée uniquement dans le domaine élastique et on réalise le brasage par fusion de métal de brasure, préalablement déposé sur la surface extérieure de la chemise dans sa partie extrême.

L'invention est également relative à une chemise de réparation d'un tube de générateur de vapeur comportant un dépôt de métal de brasage dans au moins une zone de sa surface externe au voisinage de sa partie extrême et au moins une zone, au voisinage immédiat de sa partie extrême, comportant des cannelures usinées sur la surface externe de la chemise et coaxiales à cette chemise.

Afin de bien faire comprendre l'invention, on va maintenant décrire, à titre d'exemple, non limitatif en se référant aux figures jointes en annexe une opération de réparation d'un tube d'un générateur de vapeur d'un réacteur nucléaire à eau sous pression par chemisage, dans le cas d'un procédé suivant l'art intérieur et dans le cas du procédé suivant l'invention ainsi que les moyens utilisés au cours de l'opération réalisée par le procédé suivant l'invention.

La Fig. 1 est une vue en coupe par un plan de symétrie d'une partie de la plaque tubulaire et d'un tube à l'intérieur duquel on a réalisé une réparation par chemisage par un procédé suivant l'art antérieur;

la Fig. 2 est une vue en coupe par un plan de symétrie analogue à la vue de la Fig. 1, dans le cas du procédé de chemisage suivant l'invention;

la Fig. 3 est une vue en coupe montrant la partie extrême de la chemise en cours de dudgeonnage à l'intérieur du tube;

la Fig. 4 est une vue en coupe par un plan axial d'une chemise utilisée pour la réparation d'un tube de générateur de vapeur;

la Fig. 5 est une vue agrandie du détail A de la Fig. 4.

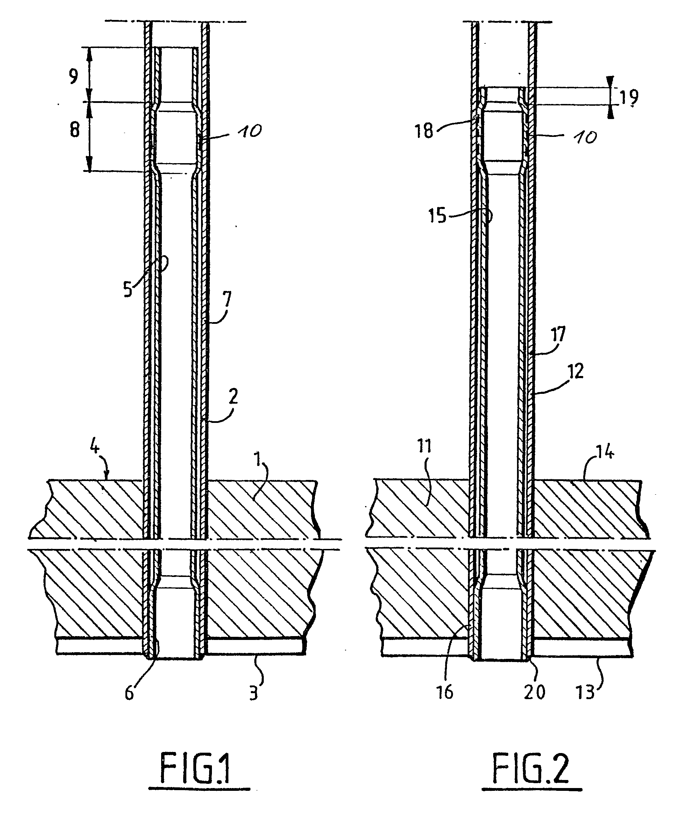

Sur la Fig. 1, on voit une plaque tubulaire 1 de forte épaisseur (de l'ordre de 0,60 m) à l'intérieur de laquelle est dudgeonné un tube 2 sur toute l'épaisseur de la plaque tubulaire entre sa face d'entrée 3 et sa face de sortie 4. Le diamètre extérieur du tube et le diamètre de l'ouverture traversant la plaque tubulaire à l'intérieur de laquelle ce tube est dudgeonné sont de l'ordre de 0,022 m. Le diamètre intérieur du tube est de l'ordre de 0,020 m.

Après un certain temps de fonctionnement du générateur de vapeur, le tube 2 présentait une fissure de petite dimension 7 dans sa partie en dehors de la plaque tubulaire 1. On a donc effectué une réparation grâce à une chemise 5 dont le diamètre extérieur nominal est de 0,01905 m et le diamètre intérieur 0,0168 m.

La chemise 5 est introduite dans le tube jusqu'au moment où sa partie inférieure affleure la partie inférieure du tube 2, au niveau de la face d'entrée 3 de la plaque tubulaire 1. On effectue alors un dudgeonnage d'une partie 6 de cette extrémité de la chemise dans le tube, à l'intérieur de la plaque tubulaire 1. Cette opération de dudgeonnage a pour effet de laminer la paroi de la chemise et de relaminer la paroi du tube 2 à l'intérieur de la plaque tubulaire 1.

On effectue également une expansion hydraulique de la chemise 5 dans une seconde zone 8 de cette chemise à l'intérieur du tube, mais à l'extérieur de la plaque tubulaire 1. Il subsiste au-dessus de la zone 8, jusqu'à l'extrémité de la chemise 5 engagée dans le tube 2, zone morte 9 dans laquelle le tube et la chemise ménagent entre un interstice annulaire.

La fixation de la chemise 5 dans le tube, suivant le procédé de l'art antérieur, est complétée par la fusion d'un métal de brasage 10 déposé sur la surface extérieure de la chemise 5 dans la zone 8 subissant l'expansion hydraulique diamétrale. En service, la zone morte 9 est le siège d'une corrosion intense et d'une activité nucléaire supérieure aux autres parties du générateur de vapeur. Ces deux phénomènes indésirables peuvent être attribués à la présence d'un interstice entre le tube et la chemise.

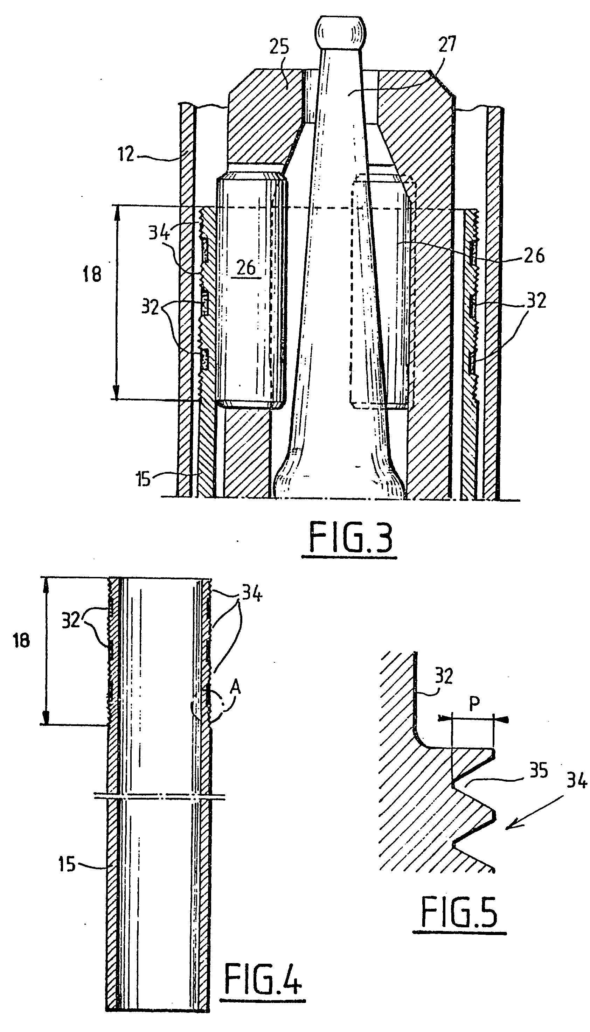

On va maintenant se reporter aux Fig. 2 et 3 pour décrire une opération de chemisage d'une tube suivant le procédé de l'invention.

Une tube 12 d'un diamètre extérieur de 0,0222 m est dudgeonné dans la plaque tubulaire 11 d'un générateur de vapeur d'un réacteur nucléaire à eau sous pression entre la face d'entrée 13 et la face de sortie 14 de cette plaque tubulaire de grande épaisseur.

Une fissure 17 est apparue dans la paroi du tube 12 en cours de service dans le générateur de vapeur.

On effectue une réparation en introduisant dans le tube 12 depuis la face d'entrée 13 de la plaque tubulaire, une chemise 15, le diamètre intérieur du tube 12 et le diamètre extérieur de la chemise 15 étant respectivement de 0,01980 et 0,01905 m.

La longueur de la chemise 15 a été choisie de façon que lorsque cette chemise est introduite dans le tube, comme représentée sur la Fig. 2, la fissure 17 est recouverte par cette chemise 15. L'extrémité inférieure de la chemise 15 affleure l'extrémité inférieure du tube 12 qui est elle-même pratiquement affleurante sur la face d'entrée 13 de la plaque tubulaire.

On effectue alors une fixation par dudgeonnage de la partie inférieure 16 de la chemise 15 dans le tube 12. Cette opération de dudgeonnage se traduit par un laminage de la paroi de la chemise 15 et un relaminage de la paroi du tube 12. L'étanchéité du tube à son extrémité affleurant la face d'entrée 13 de la plaque tubulaire est assurée par une soudure 20.

On effectue alors une expansion diamétrale de la partie extême 18 de la chemise 15 par une opération de dudgeonnage telle qu'elle est représentée sur la Fig. 3.

Sur la Fig. 3, on voit l'extrémité de la chemise 15 à l'intérieur du tube 12, au niveau de laquelle est placé, en position de travail, le dudgeon 25 comportant trois galets de laminage 26 dont un seul est représenté sur la Fig. 3. Une tige conique 27 permet de mettre en rotation et de pousser vers l'extérieur les galets 26, de façon parfaitement déterminée. L'avance de la tige 27 permet de contrôler exactement l'expansion diamétrale de l'extrémité de la chemise 15. Les galets de laminage 26 sont placés, comme il est visible sur la Fig. 3, dans une position légèrement débordante dans la direction axiale, par rapport à l'extrémité de la chemise 15.

L'expansion de la chemise 15 et du tube 12 pendant l'opération de dudgeonnage sont réglées de façon qu'après la mise en contact de la chemise 15 par expansion diamétrale avec le tube 12, le dudgeonnage se poursuive par une très légère expansion du tube 12 dont la déformation reste dans le domaine élastique.

Après retrait du dudgeon 25, le tube 12 se rétracte donc dans la direction diamétrale et assure un serrage de la partie d'extrémité 18 de la chemise 15.

De cette façon, grâce à la position légèrement saillante du dudgeon, et à un retour élastique du tube 12, à sa forme primitive, on obtient une expansion de la chemise telle que la zone morte 19 à la partie extrême de ce tube est d'une longueur très faible au-dessus de la partie déformée de la zone d'extrémité 18 de la chemise 15.

Comme il est visible sur les Fig. 3 et 4, la chemise 15 comporte dans sa partie d'extrémité 18, trois gorges 32 annulaires coaxiales à la chemise 15 remplies de métal de brasure.

Après expansion de la partie extrême 18 de la chemise 15 grâce au dudgeonnage, on place à l'intérieur de la chemise 15, dans cette zone 18, un moyen de chauffage par induction, de façon à échauffer la chemise 15 et le métal de brasure contenu dans les gorges 32, jusq'à la fusione de ce métal de brasure qui réalise une jonction étanche entre la chemise 15 et le tube 12.

En se reportant aux Fig. 4 et 5, on voit que les gorges 32 sont entourées par des zones 34 dans lesquelles la surface externe de la chemise est usinée pour constituer des cannelures 35 symétriques de révolution autour de l'axe de la chemise et ayant un profil en V comme visible sur la Fig. 5. Ces cannelures ont une profondeur P qui est égale approximativement à la moitié de la profondeur des gorges 32 remplies de métal de brasure. Les cannelures 35 disposées à pas serrés dans les zones 34 entourant les gorges 32 favorisent la propagation de la brasure contenue dans les gorges 32, lors de sa fusion.

La brasure est d'ailleurs additionnées d'un flux de brasage qui se propage le long de la zone 18, grâce aux cannelures 35, en même temps que le métal de brasage.

La gorge supérieure 32 contenant le métal et le flux de brasage, c'est à dire la gorge 32 située le plus près de l'extrémité de la chemise 15 est à une distance de cette extrémité de 3 mm, dans le cas du chemisage d'un tube de générateur de vapeur, d'un réacteur nucléaire à eau pressurisée.

Suivant le diamètre du tube et les conditions de déformation de la chemise, cette distance pourra être comprise entre 2 et 10 mm. Entre cette gorge 32 et l'extrémité du tube, au voisinage immédiat de cette extrémité, la chemise 15 est usinée pour constituer une zone 34 comportant des cannelures 35 à pas serrés d'une profondeur sensiblement égale à la moiteé de la profondeur de la gorge 32.

On voit que les principaux avantages du procédé suivant l'invention et de la chemise utilisée pour la réparation du tube sont de permettre une élimination presque totale de la zone morte et de l'interstice entre l'extrémité de la chemise et le tube, de faciliter les opérations d'expansion diamétrale de la chemise dans le tube, l'opération de dudgeonnage pouvant être parfaitement réglée et automatisée et d'améliorer la diffusion et la propagation du métal et du flux de brasage entre la chemise et le tube.

L'invention ne se limite pas au mode de réalisation qui vient d'être décrit.

C'est ainsi qu'on peut utiliser des chemises comportant une seule gorge de réserve de métal de brasage et de flux ou au contraire plusieurs gorges successives séparées par des zones comportant des cannelures annulaires comme dans l'exemple qui a été décrit.

Le jeu initial entre la chemise et le tube doit être déterminé pour qu'on puisse réaliser une expansion et une mise en contact de la chemise et du tube par déformation plastique et élastique respectivement dans les meilleures conditions possibles.

On peut également imaginer d'autres formes d'usinage de la partie extrême de la chemise pour favoriser la partie extrême de la chemise et le tube.

On pourrait utiliser non seulement des moyens de chauffage à induction pour réaliser la fusion du métal de brasage, mais encore des moyens de chauffage à effet Joule, ou des chalumeaux, à partir du moment où les dispositifs peuvent être introduits dans la chemise et dans le tube jusqu'à la zone à expansion diamétrale.

Enfin, le procédé et la chemise de réparation suivant l'invention peuvent être appliqués non seulement dans le cas de générateurs de vapeur des réacteurs à eau sous pression, mais également dans le cas de tout générateur de vapeur comportant un faisceau de tubes dont les extrémités sont dudgeonnées dans une plaque tubulaire et qui sont susceptibles d'être détériorés dans une zone à l'extérieur de cette plaque tubulaire.

**Revendications**

1. Procédé de réparation par chemisage d'un tube (12) d'un générateur de vapeur comportant un faisceau de tubes et une plaque tubulaire (11) dans laquelle les tubes (12) du faisceau sont dudgeonnés depuis la face d'entrée (13) de la plaque tubulaire (11) sur laquelle affleurent les extrémités du tube (12) jusqu'à la face de sortie (14) par laquelle les tubes pénètrent dans le corps du générateur de vapeur, consistant à introduire dans le tube (12) à réparer depuis la face d'entrée (13) de la plaque tubulaire (11), une chemise tubulaire (15) d'un diamètre extérieur un peu inférieur au diamètre intérieur du tube (12) et d'une longueur adaptée à la réparation à effectuer, à fixer la chemise (15) par dudgeonnage dans le tube (12), dans une première zone proche de son extrémité, au voisinage de la face d'entrée (13) de la plaque tubulaire (11) et à fixer la chemise (15) dans le tube (12), dans une seconde zone (18) en dehors de la plaque tubulaire (11), par une expansion diamétrale réalisée par dudgeonnage suivie d'un brasate de la surface externe de la chemise (15) sur la surface interne du tube (12), caractérisé par le fait que l'expansion diamétrale de la chemise (15) est réalisé dans sa partie extrême (18) opposée à l'extrémité (16) dudgeonnée dans la plaque tubulaire (11), de façon que la chemise (15) soit déformée plastiquement et que le tube (12) soit déformé uniquement dans le domaine élastique et qu'on réalise le brasage par fusion de métal de brasure (32) préalablement déposé sur la surface extérieure de la chemise (15) dans sa partie extrême (18).

2. Procédé de réparation suivant la revendication 1, caractérisé par le fait que l'expansion diamétrale de la chemise (15) dans sa partie extrême (18) est réalisée en disposant un dudgeon (25) à l'intérieur de la chemise (15) de façon que les galets (26) du dudgeon (5) soient légèrement débordants dans la direction axiale, par rapport à l'extrémité de la chemise (15).

3. Tube de générateur de vapeur comportant une chemise de réparation constituée par une enveloppe tubulaire d'un diamètre extérieur légèrement inférieur au diamètre intérieur du tube introduite dans le tube de façon à recouvrir un défaut (17) du tube (12) à réparer et comportant au voisinage de l'une de ses extrémités au moins une gorge (32) usinée dans sa paroi externe et remplie de métal de brasage, caractérisé par le fait que la chemise de réparation comporte en outre au moins une zone (34), au voisinage immédiat de son extrémité, où sa surface externe est usinée suivant une pluralité de cannelures (35) circulaires et coaxiales à la chemise (15).

4. Tube de générateur de vapeur suivant la revendication 3, caractérisé par le fait que la gorge (32) remplie de métal de brasage est entourée par deux zones (34) comportant des cannelure (35).

5. Tube de générateur de vapeur suivant la revendication 3, caractérisé par le fait que la chemise (15) comporte dans une de ses parties extêmes (18), au moins deux gorges (32) remplies de métal de brasure espacées dans la direction axiale de la chemine et entourée chacune par deux zones (34), comportant des cannelures (35) circulaires et coaxiales à la chemise (15).

6. Tube de générateur de vapeur suivant l'une quelconque des revendications 3, 4 et 5, caractérisé par le fait que la profondeur des cannelures (35) à l'intérieur de la paroi de la chemise (15) est sensiblement égale à la moitié de la profondeur des gorge (32) remplies de métal de brasage.

7. Tube de générateur de vapeur suivant l'une quelconque des revendications 3, 4, 5 et 6, caractérisé par le fait que la gorge (32) située le plus près de l'extrémité de la chemise (15) est à une distance de cette extrémité comprise entre 2 et 10 mm.

**Patentansprüche**

1. Verfahren zu Reparatur durch Verkleidung eines Rohres (12) eines Dampferzeugers, umfassend ein Bündel von Rohren und eine Rohrplatte (11), in der die Rohre (12) des Bündels eingewalzt sind, vor der Eintrittseite (13) der Rohrplatte (11), auf der die Enden des Rohrs (12) bündig eingelassen sind, bis zur Austrittseite (14), durch die die Rohre in den Körper des Dampferzeugers eindringen, bestehend daraus, dass in das zu reparierende Rohr (12) von der Eintrittseite (13) der Rohrplatte (11) her eine rohrförmige Einlage (15) mit einem Aussendurchmesser etwas kleiner als der Innenduchmesser des Rohrs (12) und mit einer an die auszuführende Reparatur angepassten Länge eingeführt wird, dass die Einlage (15) durch Einwalzen im Rohr (12) in einer ersten Zone nahe dessen Ende in der Nähe der Eintrittseite (13) der Rohrplatte (11) befestigt wird und dass die Einlage (15) im Rohr (12) in einer zweiten Zone (18) ausserhalb der Rohrplatte (11) durch eine durch Einwalzen, gefolgt von einem Löten der Aussenfläche der Einlage (15) auf der Innenfläche des Rohrs (12) ausgeführte Durchmesserexpansion befestigt wird, dadurch gekennzeichnet, dass die Durchmesserexpansion der Einlage (15) in ihrem äussersten Teil (18) entgegengesetzt zu dem in der Rohrplatte (11) eingewalzten Ende (16) derart ausgeführt wird, dass die Einlage (15) plastisch deformiert wird und dass das Rohr (12) lediglich in dem elastischen Bereich verformt wird, und dass das Löten durch Schmelzen von Lötmetall (32) ausgeführt wird, das im voraus auf der Aussenseite der Einlage (15) in deren äussersten Teil (18) abgesetzt worden ist.

2. Reparaturverfahren nach Anspruch 1, dadurch gekennzeichnet, dass die Durchmesserexpansion der Einlage (15) in derem äussersten Teil (18) ausgeführt wird, indem ein Röhreneinwalzapparat (25) im Inneren der Einlage (15) derart angeordnet wird, dass die Walzen (26) des Röhreneinwalzapparates (5) in der axialen Richtung in bezug auf das Ende der Einlage (15) leicht vorstehen.

3. Dampferzeugerrohr, umfassend eine Reparatureinlage, gebildet durch eine Rohrummantelung mit einem Aussendurchmesser etwas kleiner als dem Innendurchmesser des Rohrs, die in das Rohr derart eingeführt ist, dass eine zu reparierende Defektstelle (17) des Rohrs (12) überdeckt wird, und umfassend in der Nähe des einen von dessen Enden wenigstens eine Nut (32), die in ihrer Aussenwand maschinell bearbeitet und mit Lötmetall gefüllt worden ist, dadurch gekennzeichnet, dass die Reparatureinlage ausserdem wenigstens eine Zone (34) in der unmittelbaren Nähe ihres Endes aufweist, wo ihre äussere Fläche folgend einer Anzahl von kreisförmigen und zur Einlage (15) koaxialen Rillen (35) maschinell bearbeitet ist.

4. Dampferzeugerrohr nach Anspruch 3, dadurch gekennzeichnet, dass die mit Lötmetall gefüllte Nut (32) von zwei Rillen (35) umfassenden Zonen (34) umgeben ist.

5. Dampferzeugerrohr nach Anspruch 3, dadurch gekennzeichnet, dass die Einlage (15) in einem ihrer äussersten Teile (18) wenigstens zwei mit Lötmetall gefüllte Nuten (32) umfasst, die in der axialen Richtung der Einlage mit Abstand angeordnet sind und jeweils von zwei Zonen (34) umgeben sind, die kreisförmige und zur Einlage (15) koaxiale Rillen (35) aufweisen.

6. Dampferzeugerrohr nach einem beliebigen der Ansprüche 3, 4 und 5, dadurch gekennzeichnet, dass die Tiefe der Rillen (35) im Inneren der Wand der Einlage (15) im wesentlichen gleich der Hälfte der Tiefe der mit Lötmetall gefüllten Nuten (32) ist.

7. Dampferzeugerrohr nach einem beliebigen der Ansprüche 3, 4, 5 und 6, dadurch gekennzeichnet, dass die am dichtesten am Ende der Einlage (15) liegende Nut (32) in einem Abstand von diesem Ende einschliesslich zwischen 2 und 10 mm ist.

## Claims

Process for the repair by lining of a tube (12) of a steam generator comprising a bundle of tubes and a tube plate (11), in which the tubes (12) of the bundle are swaged from the inlet face (13) of the tube plate (11), with which the ends of the tube (12) are flush, up to the outlet face (14), via which the tubes penetrates into the body of the steam generator, the said process involving introducing into the tube (12) to be repaired, from the inlet face (13) of the tube plate (11), a tubular lining (15) having an outside diameter a little less than the inside diameter of the tube (12) and a length designed for the repair to be carried out, fastening the lining (15) by swaging in the tube (12) in a first zone near its end, in the vicinity of the inlet face (13) of the tube plate (11), and fastening the lining (15) in the tube (12), in a second zone (18) outside the tube plate (11), by diametrical expansion carried out by swaging followed by a brazing of the outer surface of the lining (15) on the inner surface of the tube (12), characterised in that the diametrical expansion of the lining (15) is carried out by swaging in its end part (18) opposite the end (16) swaged in the tube plate (11), so that the lining (15) undergoes plastic deformation and the tube (12) undergoes elastic deformation only, and in that brazing is carried out by the melting brazing metal (32) previously deposited on the outer surface of the lining (15) in its end part (18).

2. A repair process according to claim 1, characterised in that the diametrical expansion of the lining (15) in its end part (18) is carried out by arranging a dudgeon (25) inside the lining (15), so that the rolls (26) of the dudgeon (5) project slightly in the axial direction in relation to the end of the lining (15).

3. Steam-generator tube comprising a repair lining consisting of a tubular casing having an outside diameter slightly less than the inside diameter of the tube and sufficient length to cover the defect (17) in the tube (12) to be repaired, and comprising in the vicinity of one of its end at least one slot (32) machined in its outer wall and filled with brazing metal characterised in that the repair lining further comprises at least one zone (34), in the immediate vicinity of the same end of the lining (15), where its outer surface is machined into a plurality of grooves (35) which are circular and coaxial with the lining (15).

4. Repair lining according to claim 3, characterised in that the slot (32) filled with brazing metal is surrounded by two zones (34) possessing grooves (35).

5. Repair lining according to claim 3, characterised in that the lining (15) possess in one of its end parts (18) at least two slots (32) filled with brazing metal and spaced from one another in the axial direction of the lining and each surrounded by two zones (34) possessing grooves (35) circular and coaxial with the lining (15).

6. Repair lining according to any one of claims 3, 4 and 5, characterised in that the depth of the grooves (35) within the wall of the lining (15) is substantially equal to half the depth of the slots (32) filled with brazing metal.

7. Repair lining according to any one of claims 3, 4, 5 and 6, characterised in that the slot (32) located nearest to the end of the lining (15) is at a distance of between 2 and 10 mm from this end.

FIG.1　　　FIG.2

FIG.3

FIG.4

FIG.5